# EUROPÄISCHE PATENTANMELDUNG

(11) **EP 4 745 549 A1**
(43) Veröffentlichungstag der Anmeldung: **20.05.2026**
(21) Anmeldenummer: 25207660.9
(22) Anmeldetag: 09.10.2025
(51) Int. Cl.: G01M 3/04, G01M 3/18, G08B 21/20, G01M 3/02, G01M 13/005

(54) **ANTRIEBSVORRICHTUNG ZUM ANTREIBEN EINER KOMPONENTE EINER BEHÄLTERBEHANDLUNGSANLAGE**

(30) Priorität: 15.11.2024 DE 102024133476
(71) Anmelder: Krones AG, 93073 Neutraubling (DE)
(72) Erfinder: Eichhammer, Tobias, 93073 Neutraubling (DE); Triebel, Joerg, 93073 Neutraubling (DE); Eggl, Thomas, 93073 Neutraubling (DE); Scherl, Stefan, 93073 Neutraubling (DE); Kraus, Andreas, 93073 Neutraubling (DE); Ederer, Roland, 93073 Neutraubling (DE)
(74) Vertreter: Grünecker Patent- und Rechtsanwälte PartG mbB

(57) **Zusammenfassung**

Antriebsvorrichtung zum Antreiben einer Komponente einer Behälterbehandlungsanlage, wobei die Antriebsvorrichtung wenigstens ein Dichtungselement zum Abdichten eines Innenraums der Antriebsvorrichtung und ein Überwachungssystem umfasst, wobei das Überwachungssystem ausgebildet ist, einen Verschleißzustand des Dichtungselements zu überwachen.

## Beschreibung

Die vorliegende Erfindung betrifft eine Antriebsvorrichtung zum Antreiben einer Komponente einer Behälterbehandlungsanlage gemäß unabhängigem Anspruch 1 und ein Verfahren zum Antreiben einer Komponente einer Behälterbehandlungsanlage mittels einer Antriebsvorrichtung gemäß unabhängigem Anspruch 9.

### Stand der Technik

Antriebsvorrichtungen zum Antreiben einer Komponente einer Behälterbehandlungsanlage sind aus dem Stand der Technik bekannt.

So ist es beispielsweise bekannt einen Drehteller einer Rundläufermaschine mittels eines Motors in Rotation zu versetzen, um einen Behandlungsschritt an einem auf dem Drehteller gelagerten Behälter durchzuführen. Um den Motor beispielsweise vor Spritzwasser zu schützen, ist es ferner bekannt einen Innenraum des Motors mittels einer Dichtung gegen die Umgebung abzudichten. Beispielsweise kann es vorgesehen sein, dass die Dichtung eine Öffnung des Innenraums, aus welcher ein bewegliches Antriebselement aus einem Innenraum der Antriebsvorrichtung herausgeführt sein kann, mittels eines Dichtungsrings gegen die Umgebung abzudichten.

Wenn nun der Motor in Betrieb genommen und das Antriebselement beispielsweise in Rotation versetzt wird, führen Reibungskräfte zwischen Dichtung und Antriebselement zu einem kontinuierlichen Verschleiß der Dichtung und zu einer Abnahme der Dichtungswirkung. Mit der Zeit kann eine Abdichtung des Innenraums des Motors gegen die Umgebung nicht mehr gewährleistet werden. Um dies zu verhindern werden die Dichtung in regelmäßigen Zeitintervallen gewechselt. Da der Wechselzeitpunkt jedoch nur abgeschätzt werden kann, kommt es dazu, dass Dichtungen regelmäßig zu früh oder zu spät gewechselt werden, was wiederum zu einem hohen Ressourcenverbrauch oder zu einem Eindringen von Spritzwasser in die Antriebsvorrichtung führen kann.

### Aufgabe

Ausgehend vom bekannten Stand der Technik liegt die zu lösende technische Aufgabe der vorliegenden Erfindung darin, eine Antriebsvorrichtung zum Antreiben einer Komponente einer Behälterbehandlungsanlage und ein entsprechendes Verfahren bereitzustellen, welche eine Überwachung einer Dichtheit eines Innenraums der Antriebsvorrichtung gegenüber einer Umgebung ermöglichen.

### Lösung

Diese Aufgabe wird durch die erfindungsgemäße Antriebsvorrichtung zum Antreiben einer Komponente einer Behälterbehandlungsanlage gemäß unabhängigem Anspruch 1 und das Verfahren zum Antreiben einer Komponente einer Behälterbehandlungsanlage mittels einer Antriebsvorrichtung gemäß unabhängigem Anspruch 9 gelöst. Bevorzugte Ausführungsformen sind in den abhängigen Ansprüchen erfasst.

Die erfindungsgemäße Antriebsvorrichtung zum Antreiben einer Komponente einer Behälterbehandlungsanlage umfasst wenigstens ein Dichtungselement zum Abdichten eines Innenraums der Antriebsvorrichtung und ein Überwachungssystem, wobei das Überwachungssystem ausgebildet ist, einen Verschleißzustand des Dichtungselements zu überwachen.

Bei der Antriebsvorrichtung kann es sich um jede Vorrichtung handeln, welche zum translatorischen und/oder rotatorischen Antreiben der Komponente der Behälterbehandlungsanlage geeignet ist. Beispielsweise kann es sich bei der Antriebsvorrichtung um einen Servomotor handeln, mittels welchem die Komponente in Rotation versetzt werden kann. Alternativ kann es sich bei der Antriebsvorrichtung jedoch auch um einen Linearmotor handeln, mittels welchem die Komponente translatorisch bewegt werden kann. Es kann sich bei der Antriebsvorrichtung jedoch auch um jede andere hier nicht explizit angeführte Vorrichtung handeln, welche zum translatorischen und/oder rotatorischen Antreiben der Komponente geeignet ist.

Bei der Komponente der Behälterbehandlungsanlage kann es sich um jede Komponente handeln, welche durch die Antriebsvorrichtung translatorisch und/oder rotatorisch bewegt werden kann. Beispielsweise kann es sich bei der Komponente um eine Behälteraufnahme, wie einen Drehteller handeln. Der Drehteller kann beispielsweise mittels der Antriebsvorrichtung in Rotation versetzt werden. Es kann sich jedoch auch um jede andere Komponente der Behälterbehandlungsanlage handeln.

Bei dem Innenraum kann es sich um einen von der Umgebung zumindest teilweise abgeschlossenen Bereich der Antriebsvorrichtung handeln. In dem Innenraum kann beispielsweise eine Steuerungselektronik und/oder eine Antriebskomponente der Antriebsvorrichtung gegen Umgebungseinflüsse geschützt gelagert sein.

Das Dichtungselement kann vorgesehen sein, um zumindest einen Teilbereich der Antriebsvorrichtung gegen eine Umgebung abzudichten. Beispielsweise kann es vorgesehen sein, dass das Dichtungselement einen Teilbereich der Antriebsvorrichtung gegen die Umgebung abdichtet, in welchem eine Antriebskomponente der Antriebsvorrichtung aus dem Innenraum der Antriebsvorrichtung herausgeführt wird. Alternativ kann es beispielsweise auch vorgesehen sein, dass das Dichtungselement eine austauschbare Teilekomponente der Antriebsvorrichtung gegen die Umgebung abdichtet.

Das Überwachungssystem kann ein System sein, welches ausgebildet ist, den Verschleißzustand oder einen Parameter, welcher mit dem Verschleißzustand in Verbindung steht zu bestimmen. Der Verschleißzustand muss dabei nicht am Dichtungselement selbst bestimmt werden, sondern kann beispielsweise indirekt über einen Parameter, wie beispielsweise einen Betriebsparameter, der Antriebsvorrichtung bestimmt werden, welcher mit dem Verschleißzustand des Dichtungselements in Verbindung stehen kann. Es kann jedoch auch vorgesehen sein, dass der Verschleißzustand am Dichtungselement selbst bestimmt wird, beispielsweise durch Messung eines Parameters des Dichtungselements.

Der Verschleißzustand kann einen Ist-Zustand des Dichtungselements mit einem Ausgangszustand des Dichtungselements in Verbindung setzen. Bei dem Ausgangszustand kann es sich um einen Neuzustand des Dichtungselements, also den Zustand eines neuen unbenutzten Dichtungselements, handeln. Der Verschleißzustand kann beispielsweise in Prozent angegeben sein, wobei ein Verschleißzustand von null Prozent ein neues unbenutztes Dichtungselement und ein Verschleißzustand von 100 Prozent ein vollkommen verschlissenes Dichtungselement beschreibt. Ein vollkommen verschlissenes Dichtungselement kann beispielsweise ein Dichtungselement sein, welches keine hinreichende Abdichtung des Innenraums gegenüber einer Umgebung gewährleistet. Der neue Zustand und der vollkommen verschlissene Zustand können jedoch auch durch jeden anderen Prozentwert oder durch jede andere geeignete Größe beschrieben sein. Beispielsweise kann der Verschleißzustand auch binär beschrieben sein, wobei ein Verschleißzustand von 0 beispielsweise ein nicht verschlissenes und ein Verschleißzustand von 1 ein verschlissenes Dichtungselement beschreibt (oder andersherum).

Dadurch, dass die erfindungsgemäße Antriebsvorrichtung ausgebildet ist, den Verschleißzustand des Dichtungselements zu überwachen, kann überprüft werden, ob eine hinreichende Abdichtung des Innenraums durch das Dichtungselement gegenüber einer Umgebung gegeben ist. Dies ermöglicht es durch eine nicht hinreichende Abdichtung des Innenraums hervorgerufene Defekte oder Beschädigungen an einer in dem Innenraum gelagerten Komponente der Antriebsvorrichtung frühzeitig zu erkennen und zu verhindem. Weiterhin kann ein Wechselzeitpunkt für ein Dichtungselement genau getimt werden und ein zu früher unnötiger Wechsel des Dichtungselements verhindert werden.

In einer Ausführungsform kann das Überwachungssystem einen Feuchtigkeitssensor umfassen und ausgebildet sein, basierend auf einem durch den Feuchtigkeitssensor bestimmten Feuchtigkeitswert im Innenraum den Verschleißzustand des Dichtungselements zu bestimmen. Da der Feuchtigkeitswert im Innenraum in direktem Zusammenhang mit dem Verschleißzustand des Dichtungselements steht, stellt der durch den Feuchtigkeitssensor bestimmte Feuchtigkeitswert eine besonders geeignete Größe zum Bestimmen des Verschleißzustands des Dichtungselements dar.

Ferner kann es vorgesehen sein, dass das Überwachungssystem einen Sensor zum Bestimmen eines Betriebsparameters der Antriebsvorrichtung umfasst und ausgebildet ist, einen Betriebsparameter der Antriebsvorrichtung, welcher mit einem durch die Antriebsvorrichtung zum Erreichen einer bestimmten Drehzahl aufzuwendenden Drehmoment in Verbindung steht, zu bestimmen. Soll durch die Antriebsvorrichtung die Komponente in Rotation versetzt werden, so steht die Antriebsvorrichtung typischerweise über ein Antriebselement mit der Komponente in Verbindung. Um eine Rotation des Antriebselements auf die Komponente übertragen zu können, kann das Antriebselement aus dem Innenraum über eine Öffnung herausgeführt werden, wobei die Öffnung mit dem Dichtungselement gegen die Umgebung abgedichtet werden kann. Da eine Reibungskraft zwischen Antriebsvorrichtung (beziehungsweise zwischen Antriebselement) und Dichtungselement mit zunehmendem Verschleißzustand abnimmt und ein durch die Antriebsvorrichtung zum Erreichen einer bestimmten Drehzahl aufzuwendendes Drehmoment mit der Reibungskraft zwischen Antriebselement und Dichtungselement in direktem Zusammenhang steht, stellt die Messung des mit dem Drehmoment in Verbindung stehenden Betriebsparameters eine besonders geeignete Größe dar, um den Verschleißzustand des Dichtungselements zu bestimmen. Bei dem Betriebsparameter kann es sich beispielsweise um einen Stromverbrauch der Antriebsvorrichtung handeln. Der Sensor kann in diesem Fall beispielsweise ein Strommessgerät umfassen und ausgebildet sein, das Drehmoment basierend auf dem Stromverbrauch der Antriebsvorrichtung zu bestimmen. Alternativ kann der Sensor jedoch auch einen Dehnungsmesstreifen zur Drehmomentbestimmung umfassen. In diesem Fall kann es sich bei dem Betriebsparameter beispielsweise um einen Widerstand des Dehnungsmessstreifens handeln. Weiterhin kann der Sensor auch als magnetisch induktiver Sensor oder auf jede andere geeignete Weise ausgestaltet sein.

Anstelle eines Sensors / Strommessgerät kann das benötigte Drehmoment über den Strom, der der Antriebseinheit zugeführt wird, bestimmt werden. Es ist somit möglich das Drehmoment aus dem benötigten Strom zu berechnen.

In einer Ausführungsform kann es vorgesehen sein, dass das Überwachungssystem ausgebildet ist den Feuchtigkeitswert und/oder den Betriebsparametermit einem Referenzfeuchtigkeitswert und/oder einem Referenzbetriebsparameterwert zu vergleichen und basierend auf dem Vergleich den Verschleißzustand des Dichtungselements zu bestimmen. Durch Vergleich mit dem Referenzwert kann aus dem gemessenen Feuchtigkeitswert und/oder dem gemessenen Betriebsparameter der Verschleißzustand des Dichtungselements auf präzise Weise quantifiziert werden.

In einer Weiterbildung der vorhergehenden Ausführungsform kann das Überwachungssystem ausgebildet sein, den Verschleißzustand mit einem Referenzwert zu vergleichen und basierend auf dem Vergleich, eine Information an einen Bediener auszugeben, dass das Dichtungselement ausgetauscht werden muss oder basierend auf dem Vergleich eine Information an einen Bediener auszugeben, welche einen Wartungszeitpunkt umfasst, zu welchem das Dichtungselement ausgetauscht werden muss. Auf diese Weise kann ein Austausch eines verschlissenen Dichtungselements eingeleitet beziehungsweise terminiert werden und eine Beschädigung etwaiger in dem Innenraum gelagerter Komponenten verhindert sowie ein zu früher Austausch des Dichtungselements vermieden werden.

In einer Ausführungsform kann es vorgesehen sein, dass die Antriebsvorrichtung eine Druckausgleichskomponente umfasst, über welche eine in der Antriebsvorrichtung vorhandene Feuchtigkeit aus der Antriebsvorrichtung herausgeführt werden kann. Somit kann beispielsweise nach dem Austausch des Dichtungselements eine etwaige in dem Innenraum der Antriebsvorrichtung vorhandene Restfeuchte aus dem Innenraum entfernt werden. Weiterhin kann auch für den Fall, dass ein Austausch eines verschlissenen Dichtungselements nicht sofort ausgeführt werden kann, eine Feuchtigkeit in dem Innenraum bis zum Austausch kontrolliert werden.

Weiterhin kann es vorgesehen sein, dass die Antriebsvorrichtung einen Servomotor und die Komponente einen an einer Rundläufermaschine der Behälterbehandlungsanlage angeordneten Drehteller umfasst, wobei die Antriebsvorrichtung ausgebildet ist unterhalb des Drehtellers und entlang einer radialen Richtung der Rundläufermaschine angeordnet zu werden. Auf diese Weise kann eine spezifische Antriebsvorrichtung für einen Drehteller einer Rundläufermaschine realisiert werden.

In einer Weiterbildung der vorhergehenden Ausführungsform kann eine Abmessung der Antriebsvorrichtung entlang einer Richtung zunehmen, wobei bei Anordnung der Antriebsvorrichtung unterhalb des Drehtellers entlang der radialen Richtung der Rundläufermaschine, die Abmessung der Antriebsvorrichtung entlang der radialen Richtung zunimmt. Bei entsprechender Ausgestaltung der Antriebsvorrichtung kann eine Anzahl von auf der Rundläufermaschine angeordneter Antriebsvorrichtungen und Drehteller maximiert werden.

Erfindungsgemäß ist weiterhin ein Verfahren zum Antreiben einer Komponente einer Behälterbehandlungsanlage mittels einer Antriebsvorrichtung vorgesehen, wobei die Antriebsvorrichtung wenigstens ein Dichtungselement zum Abdichten eines Innenraums der Antriebsvorrichtung und ein Überwachungssystem umfasst, wobei das Überwachungssystem einen Verschleißzustand des Dichtungselements überwacht.

Durch das Bestimmen des Verschleißzustands des Dichtungselements kann durch das erfindungsgemäße Verfahren überprüft werden, ob eine hinreichende Abdichtung des Innenraums durch das Dichtungselement gegenüber einer Umgebung gegeben ist. Somit kann ein durch eine nicht hinreichende Abdichtung des Innenraums hervorgerufener Defekte oder eine Beschädigung an einer in dem Innenraum gelagerten Komponente der Antriebsvorrichtung verhindert werden. Weiterhin kann ein Wechselzeitpunkt für ein Dichtungselement genau getimt werden und ein zu früher unnötiger Wechsel des Dichtungselements vermieden werden.

**In** einer Ausführungsform des Verfahrens kann das Überwachungssystem einen Feuchtigkeitssensor umfassen und basierend auf einem durch den Feuchtigkeitssensor bestimmten Feuchtigkeitswert im Innenraum den Verschleißzustand des Dichtungselements bestimmen. Da der Feuchtigkeitswert im Innenraum in direktem Zusammenhang mit dem Verschleißzustand des Dichtungselements steht, stellt der durch den Feuchtigkeitssensor bestimmte Feuchtigkeitswert eine besonders geeignete Größe zum Bestimmen des Verschleißzustands des Dichtungselements dar.

Weiterhin kann es vorgesehen sein, dass das Überwachungssystem einen Sensor zum Bestimmen eines Betriebsparameters der Antriebsvorrichtung umfasst und einen Betriebsparameter der Antriebsvorrichtung, welcher mit einem durch die Antriebsvorrichtung zum Erreichen einer bestimmten Drehzahl aufzuwendenden Drehmoment in Verbindung steht, bestimmt. Um eine Rotation eines Antriebselements der Antriebsvorrichtung auf die Komponente übertragen zu können, wird das Antriebselement typischerweise aus dem Innenraum der Antriebsvorrichtung über eine Öffnung herausgeführt, wobei die Öffnung mit dem Dichtungselement gegen die Umgebung abgedichtet werden kann. Um den Innenraum abdichten zu können, stehen Antriebselement und Dichtungselement in Kontakt miteinander. Da eine Reibungskraft zwischen Antriebsvorrichtung (beziehungsweise zwischen Antriebselement) und Dichtungselement mit zunehmendem Verschleißzustand des Dichtungselements abnimmt und ein durch die Antriebsvorrichtung zum Erreichen einer bestimmten Drehzahl aufzuwendendes Drehmoment mit der Reibungskraft zwischen Antriebselement und Dichtungselement in direktem Zusammenhang steht, stellt die Messung des mit dem Drehmoment in Verbindung stehenden Betriebsparameters eine besonders geeignete Größe dar, um den Verschleißzustand des Dichtungselements zu bestimmen.

Es kann in einer Ausführungsform des Verfahrens außerdem vorgesehen sein, dass das Überwachungssystem den Feuchtigkeitswert und/oder den Betriebsparameter mit einem Referenzfeuchtigkeitswert und/oder einem Referenzbetriebsparameterwert vergleicht und basierend auf dem Vergleich den Verschleißzustand des Dichtungselements bestimmt. Durch Vergleich mit dem Referenzwert kann aus dem gemessene Feuchtigkeitswert und/oder dem gemessenen Betriebsparameter der Verschleißzustand des Dichtungselements auf präzise Weise quantifiziert werden.

In einer Weiterbildung des Verfahrens nach der vorherigen Ausführungsform kann es vorgesehen sein, dass das Überwachungssystem den Verschleißzustand mit einem Referenzwert vergleicht und basierend auf dem Vergleich, eine Information an einen Bediener ausgibt, dass das Dichtungselement ausgetauscht werden muss oder basierend auf dem Vergleich eine Information an einen Bediener ausgibt, welche einen Wartungszeitpunkt umfasst, zu welchem das Dichtungselement ausgetauscht werden muss. Auf diese Weise kann ein Austausch eines verschlissenen Dichtungselements eingeleitet beziehungsweise terminiert werden und eine Beschädigung etwaiger in dem Innenraum gelagerter Komponenten verhindert werden.

In einer Ausführungsform des Verfahrens kann es vorgesehen sein, dass die Antriebsvorrichtung eine Druckausgleichskomponente umfasst, über welche eine in der Antriebsvorrichtung vorhandene Feuchtigkeit aus der Antriebsvorrichtung herausgeführt wird. Somit kann beispielsweise nach dem Austausch des Dichtungselements eine etwaige in dem Innenraum der Antriebsvorrichtung vorhandene Restfeuchte aus dem Innenraum entfernt werden. Weiterhin kann auch für den Fall, dass ein Austausch eines verschlissenen Dichtungselements nicht sofort ausgeführt werden kann, eine Feuchtigkeit in dem Innenraum bis zum Austausch kontrolliert werden.

Ferner kann es vorgesehen sein, dass die Antriebsvorrichtung einen Servomotor und die Komponente einen an einer Rundläufermaschine der Behälterbehandlungsanlage angeordneten Drehteller umfasst und die Antriebsvorrichtung unterhalb des Drehtellers und entlang einer radialen Richtung der Rundläufermaschine angeordnet ist, wobei optional eine Abmessung der Antriebsvorrichtung entlang einer Richtung zunimmt, wobei bei Anordnung der Antriebsvorrichtung unterhalb des Drehtellers entlang der radialen Richtung, die Abmessung der Antriebsvorrichtung entlang der radialen Richtung zunimmt. Auf diese Weise kann eine spezifische Antriebsvorrichtung für einen Drehteller einer Rundläufermaschine realisiert werden. Durch die optionale Ausgestaltung der Antriebsvorrichtung kann eine Anzahl von auf der Rundläufermaschine angeordneter Antriebsvorrichtungen und Drehteller maximiert werden.

### Kurze Figurenbeschreibung

- Fig. 1:: Antriebsvorrichtung zum Antreiben einer Komponente einer Behälterbehandlungsanlage gemäß einer Ausführungsform
- Fig. 2 a und b:: Antriebsvorrichtung zum Antreiben einer Komponente einer Behälterbehandlungsanlage gemäß einer Ausführungsform

### Ausführliche Figurenbeschreibung

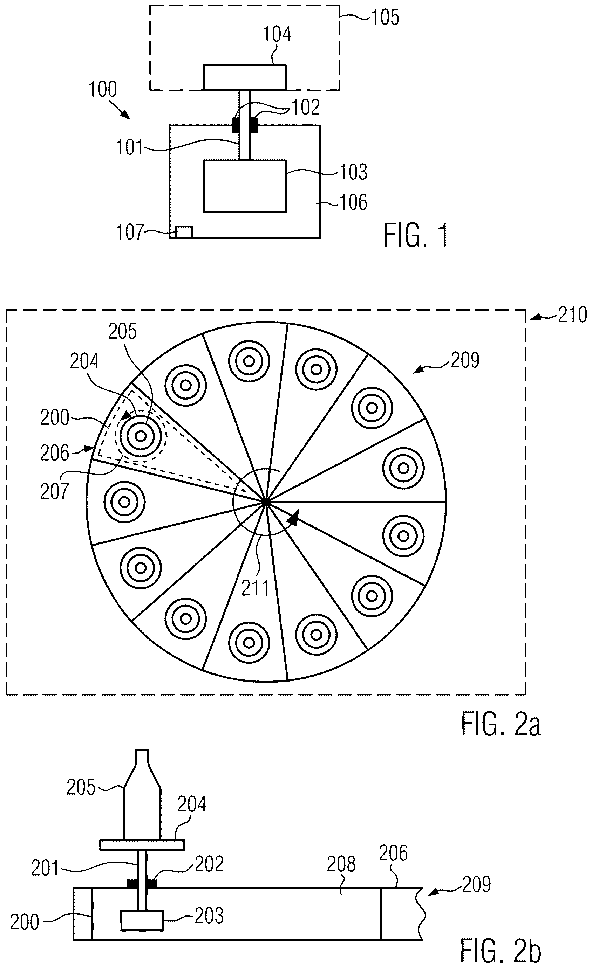

Fig. 1 zeigt eine Antriebsvorrichtung 100 zum Antreiben einer Komponente 104 einer Behälterbehandlungsanlage 105 gemäß einer Ausführungsform.

Erfindungsgemäß umfasst die Antriebsvorrichtung 100 wenigstens ein Dichtungselement 102 zum Abdichten eines Innenraums 106 der Antriebsvorrichtung 100 und ein Überwachungssystem 103, welche ausgebildet ist, einen Verschleißzustand des Dichtungselements 102 zu überwachen.

Bei der Antriebsvorrichtung 100 kann es sich um eine Antriebsvorrichtung 100 handeln, welche zum translatorischen und/oder rotatorischen Antreiben der Komponente der 104 der Behälterbehandlungsanlage 105 ausgebildet sein kann.

Ist die Antriebsvorrichtung 100 zum rotatorischen Antreiben der Komponente 104 der Behälterbehandlungsanlage 105 ausgebildet, so kann die Antriebsvorrichtung 100 beispielsweise einen Servomotor umfassen. Die Antriebsvorrichtung 100 kann jedoch auch jede andere zum rotatorischen Antrieb der Komponente 104 geeignete Vorrichtung umfassen.

Ist die Antriebsvorrichtung 100 zum translatorischen Antreiben der Komponente 104 der Behälterbehandlungsanlage 105 ausgebildet, dann kann die Antriebsvorrichtung 100 beispielsweise einen Linearmotor umfassen. Auch hier ist die Ausgestaltung der Antriebsvorrichtung 100 mit einem Linearantrieb als beispielhaft zu verstehen, so dass die Antriebsvorrichtung auch jede andere Vorrichtung umfassen kann, welche zum translatorischen Antrieb der Komponente 104 geeignet sein kann.

Die Antriebsvorrichtung 100 kann über wenigstens eine steckbare Verbindung mit einer Steuereinheit verbunden sein, über welche die Antriebsvorrichtung 100 angesteuert werden kann. Ist mehr als eine Antriebsvorrichtung 100 vorgesehen, dann können auch die Antriebsvorrichtungen 100 untereinander mittels steckbarer Verbindungen verbunden sein. Die Steckverbindungen können drehbare Winkelstecker umfassen. Weiterhin kann auch eine berührungslose Datenübertragung zwischen Antriebsvorrichtung 100 und der Steuereinheit oder unter Antriebsvorrichtungen 100 untereinander vorgesehen sein.

Zur Stromversorgung der Antriebsvorrichtung 100 kann es auch vorgesehen sein, einen Schleifring einzusetzen. Auf diese Weise kann beispielsweise bei einer Rotation der gesamten Antriebsvorrichtung 100, wie es beispielsweise bei einer Anordnung der Antriebsvorrichtung 100 auf einer Rundläufermaschine der Fall ist, eine kontinuierliche Stromversorgung der Antriebsvorrichtung 100 gewährleistet und Ausfälle der Antriebsvorrichtung 100 durch Kabelbrüche verhindert werden.

Das Dichtelement 102 kann beispielsweise vorgesehen sein, um eine Öffnung des Innenraums 106 gegenüber einer Umgebung abzudichten. Wie in der Fig. 1 dargestellt kann es sich bei der Öffnung um eine Öffnung handeln, durch welche ein Antriebselement 101 der Antriebsvorrichtung 100 aus dem Innenraum 106 der Antriebsvorrichtung 100 herausgeführt werden kann, um mit der Komponente 104 in Verbindung gebracht zu werden und diese antreiben zu können. Das Antriebselement 101 kann somit vorgesehen sein, um eine durch die Antriebvorrichtung 100 generierte translatorische und/oder rotatorische Bewegung auf die Komponente 104 zu übertragen.

Ein Material, aus welchem das Dichtungselement hergestellt ist, kann basierend auf dem gewünschten Einsatzzweck der Antriebsvorrichtung 100 in der Behälterbehandlungsanlage 105 flexibel gewählt sein. Das Dichtungselement kann beispielsweise einen Gummi und/oder einen Kunststoff umfassen.

Zum Wechseln des Dichtungselements kann ein spezifisches Wechselwerkzeug vorgesehen sein. Das Wechselwerkzeug kann beispielweise ausgebildet sein, das Dichtungselement 102 mit einer bestimmten Einpresstiefe in die Öffnung des Innenraums 106 der Antriebsvorrichtung 100 einzupressen. Ein Nachkontrollieren der Einpresstiefe mittels einem Messwerkzeug kann auf diese Weise vermieden werden und der Dichtungselementwechsel effizienter gestaltet werden. Weiterhin können Defekte der Antriebsvorrichtungen 100 durch ein fehlerhaft eingebrachtes Dichtungselement 102 vermieden werden.

Um eine Bewegung des Antriebselements 101 der Antriebsvorrichtung 100 zu ermöglichen, kann das Antriebselement gegenüber einer Wandung des Innenraums 106 ein Spiel aufweisen. Wie in der Fig. 1 dargestellt, kann das Dichtungselemente 102 zwischen der Wandung des Innenraums 106 und dem Antriebselement 101 der Antriebsvorrichtung 100 vorgesehen sein, um den Innenraum 106 gegenüber einer Umgebung abzudichten. Beispielsweise kann durch die Dichtung 102 verhindert werden, dass ein Fluid, wie beispielsweise eine Flüssigkeit, von der Behälterbehandlungsanlage 105 in den Innenraum 106 der Antriebsvorrichtung 100 gelangt.

Eine Form der Dichtung kann beispielsweise in Abhängigkeit einer Form des Antriebselements 101 der Antriebsvorrichtung 100 gewählt sein.

Weist das Antriebselement 101 beispielsweise eine zylindrische Form auf, so kann das Dichtungselement 102 als Dichtungsring ausgestaltet sein. Diese Art der Ausgestaltung des Antriebselements 101 und des Dichtungselements 102 kann beispielsweise bei einer Antriebsvorrichtung 100, welche zum rotatorischen Antrieb der Komponente 104 der Behälterbehandlungsanlage 105 ausgestaltet ist, vorgesehen sein.

Soll durch das Antriebselement 101 eine translatorische Bewegung der Komponente 104 erreicht werden, kann es beispielsweise auch vorgesehen sein, dass das Antriebselement 101 eine quaderförmige Form aufweist und das Dichtungselement 102 eine viereckige oder rechteckige Form aufweist.

Da durch das Dichtungselement 102 eine Abdichtung des Innenraums 106 der Antriebsvorrichtung 100 erreicht werden soll, kann das Dichtungselement mit dem in der Fig. 1 gezeigten Antriebselement 101 der Antriebsvorrichtung 100 in Kontakt stehen. Bei einer rotatorischen und/oder translatorischen Bewegung des Antriebselements 101 der Antriebsvorrichtung 100 wirkt somit eine Reibungskraft zwischen Dichtungselement 102 und Antriebselement 101 einer rotatorischen und/oder translatorischen Bewegung des Antriebselements 101 entgegen. Durch die Reibungskraft kann es zu einem graduellen Verschleiß des Dichtungselements 102 mit der Zeit kommen. Mit zunehmenden Verschleiß des Dichtungselements, welches beispielsweise mit einer Abtragung von Material des Dichtungselements einhergehen kann, kann sich die Reibungskraft zwischen Antriebselement 101 und Dichtungselement 102 verändern.

Da bei zunehmenden Verschleiß des Dichtungselements 102 eine hinreichende Abdichtung des Innenraums 106 der Antriebsvorrichtung 100 nicht mehr sichergestellt werden kann, kann beispielsweise eine bei der Behandlung von Behältern mit der Behälterbehandlungsanlage 104 freiwerdende Flüssigkeit in den Innenraum der Antriebsvorrichtung 100 gelangen und beispielsweise einen Defekt einer in dem Innenraum angeordneter Steuerelektronik und/oder Antriebskomponente der Antriebsvorrichtung 100 hervorrufen.

Um dies zu verhindern, ist das erfindungsgemäße Überwachungssystem 103 ausgebildet einen Verschleißzustand des Dichtungselements 102 zu überwachen. Somit erlaubt das Überwachungssystem 103 einen Wechselzeitpunkt für das Dichtungselement 102 präzise zu bestimmen, wodurch ein unnötiger frühzeitiger Wechsel eines noch intakten Dichtungselements 102 vermieden werden kann. Weiterhin kann das Eindringen von Flüssigkeit oder anderen ungewünschten Substanzen in den Innenraum 106 aufgrund eines verschlissenen Dichtungselements 102 verhindert werden. Somit kann mittels des Überwachungssystems 103 der Wechsel eines Dichtungselements 102 präzise terminiert und Ressourcen eingespart werden. Weiterhin können Beschädigungen von in dem Innenraum 106 der Antriebsvorrichtung 100 angeordneten Komponenten verhindert werden.

Das Überwachungssystem 103 kann beispielsweise ausgebildet sein, den Verschleißzustand des Dichtungselements 102 direkt zu bestimmen oder einen Parameter der Antriebsvorrichtung 100 zu bestimmen und basierend auf dem Parameter wiederum den Verschleißzustand des Dichtungselements 102 zu bestimmen.

Bei dem Parameter kann es sich beispielsweise um einen Betriebsparameter der Antriebsvorrichtung 100, wie beispielsweiseeinen Steuerparameter zum Steuern eines Betriebszustands der Antriebsvorrichtung 100 handeln. Ist die Antriebsvorrichtung 100 zum rotatorischen Antreiben der Komponente 104 ausgebildet, dann kann es sich bei dem Betriebsparameter beispielsweise um einen Betriebsparameter der Antriebsvorrichtung 100 handeln, welcher mit einem von der Antriebsvorrichtung 100 zum Erreichen einer bestimmten Drehzahl aufzuwendenden Drehmoment in Verbindung steht.. Hierfür kann das Überwachungssystem 103 beispielsweise einen Sensor zum Bestimmen eines mit dem aufgewendeten Drehmoment in Verbindung stehenden Betriebsparameters der Antriebsvorrichtung umfassen und ausgebildet sein, basierend auf dem Betriebsparameter ein durch die Antriebsvorrichtung 100 zum Erreichen einer bestimmten Drehzahl aufzuwendendes Drehmoment zu bestimmen.

Bei dem Betriebsparameter kann es sich beispielsweise um einen Stromverbrauch der Antriebsvorrichtung 100 handeln. In diesem Fall kann der Sensor beispielsweise ein Strommessgerät umfassen und ausgebildet sein, das Drehmoment basierend auf einem Stromverbrauch der Antriebsvorrichtung 100 zu bestimmen. Alternativ kann der Sensor jedoch auch einen Dehnungsmessstreifen zur Drehmomentbestimmung umfassen. In diesem Fall kann es sich bei dem Betriebsparameter beispielsweise um einen Widerstand des Dehnungsmessstreifens handeln. Alternativ kann es auch vorgesehen sein, dass der Sensor als magnetisch induktiver Sensor oder auf jede andere geeignete Weise ausgestaltet ist.

Ist die Antriebsvorrichtung 100 zum translatorischen Antreiben der Komponente 104 ausgebildet, so kann der Betriebsparameter beispielsweise eine durch die Antriebsvorrichtung 100 aufgewandte Kraft sein, welche benötigt wird, um die Komponente 104 auf eine bestimmte Geschwindigkeit zu beschleunigen.

Bei dem Parameter der Antriebsvorrichtung 100 kann es sich jedoch auch um einen Umgebungsparameter handeln, welchem die Antriebsvorrichtung 100 ausgesetzt ist. Beispielsweise kann es sich bei dem Parameter um einen Feuchtigkeitswert in dem Innenraum der Antriebsvorrichtung 100 handeln. Um den Feuchtigkeitswert in dem Innenraum zu bestimmen, kann das Überwachungssystem 103 einen Feuchtigkeitssensor umfassen und ausgebildet sein, basierend auf einem durch den Feuchtigkeitssensor bestimmten Feuchtigkeitswert im Innenraum 106, den Verschleißzustand des Dichtungselements 102 zu bestimmen.

Um den Verschleißzustand des Dichtungselements 102 basierend auf dem Betriebsparameter und/oder dem Feuchtigkeitswert im Innenraum der Antriebsvorrichtung 101 zu bestimmen, kann das Überwachungssystem 103 ausgebildet sein, den Betriebsparameter und/oder den Feuchtigkeitswert mit einem Referenzbetriebsparameterwert und/oder einem Referenzfeuchtigkeitswert zu vergleichen und basierend auf dem Vergleich den Verschleißzustand zu bestimmen.

Wird sowohl der gemessene Betriebsparameter als auch der gemessene Feuchtigkeitswert zum Bestimmen des Verschleißzustandes genutzt, dann kann eine Genauigkeit, mit welcher der Verschleißzustand bestimmt wird, erhöht werden. Jedoch auch bei Bestimmung des Verschleißzustands basierend auf dem mit dem Drehmoment in Verbindung stehenden Betriebsparameter oder dem Feuchtigkeitswert, kann bereits eine hinreichend genaue Bestimmung des Verschleißzustands erreicht werden.

Zum Bestimmen und/oder Überwachen des Verschleißzustands kann es beispielsweise vorgesehen sein, dass das Überwachungssystem 103 eine Computereinheit mit einem Prozessor und einer Speichereinheit, wie beispielsweise einem nicht flüchtigen Speicher, umfasst. In der Speichereinheit können eine Reihe von Referenzbetriebsparameterwerten und/oder Referenzfeuchtigkeitswerten hinterlegt sein. Die Referenzbetriebsparameterwerte und/oder die Referenzfeuchtigkeitswerte können dabei einem bestimmten Typ von Antriebsvorrichtung 100 zugeordnet sein. Es können dabei für eine Vielzahl von verschiedenen Antriebsvorrichtungen 100 Referenzwerte in der Speichereinheit hinterlegt sein. Das Überwachungssystem 103 kann ausgebildet sein, die gemessenen Betriebsparameterwerte und Feuchtigkeitswerte mit den Referenzwerten für die entsprechende Antriebsvorrichtung 100 zu vergleichen. Die Referenzbetriebsparameterwerte und Referenzfeuchtigkeitswerte können beispielsweise bestimmten Verschleißzuständen zugeordnet sein, so dass basierend auf dem gemessenen Betriebsparameter und/oder Feuchtigkeitswert der Verschleißzustand bestimmt werden kann. Es kann auch vorgesehen sein, dass in der Speichereinheit wenigstens eine Funktion hinterlegt ist, mittels welcher basierend auf dem gemessenen Betriebsparameter und/oder Feuchtigkeitswert der Verschleißzustand bestimmt werden kann.

Der Verschleißzustand kann beispielsweise in Prozent angegeben sein, wobei ein Verschleißzustand von hundert Prozent ein vollkommen verschlissenes Dichtungselement und ein Verschleißzustand von null Prozent ein neues unbenutztes Dichtungselement beschreiben kann (oder andersherum). Ein neues und/oder vollkommen verschlissenes Dichtungselement kann jedoch auch durch jeden anderen Prozentwert oder durch jede andere geeignete Größe beschrieben werden.

Beispielsweise kann es auch vorgesehen sein, dass der Verschleißzustand binär angegeben wird, wobei ein Verschleißzustand von null beispielsweise bedeuten kann, dass Dichtungselement nicht verschlissen ist und ein Verschleißzustand von eins beispielsweise bedeuten kann, dass das Dichtungselement verschlissen ist (oder andersherum). In diesem Fall kann es beispielsweise vorgesehen sein, dass der gemessene Betriebsparameter und/oder der gemessene Feuchtigkeitswert mit wenigstens einem Schwellenwert, welcher in der oben beschriebenen Speichereinheit hinterlegt sein kann, verglichen wird. Wenn der Feuchtigkeitswert den Schwellenwert überschreitet und/oder wenn der Betriebsparameter den Schwellenwert unterschreitet, kann es beispielsweise vorgesehen sein, dass der Verschleißzustand einen binären Wert von eins annimmt und anzeigt, dass das Dichtungselement 102 verschlissen ist.

Weiterhin kann es vorgesehen sein, dass die Antriebsvorrichtung 100 eine Druckausgleichskomponente 107 umfasst, über welche eine in der Antriebsvorrichtung 100 vorhandene Feuchtigkeit aus der Antriebsvorrichtung 100 herausgeführt werden kann. Bei der Druckausgleichskomponente 107 kann es sich beispielsweise um eine Membran handeln, welche ausgebildet ist Feuchtigkeit, wie beispielsweise Wasserdampf, aus dem Innenraum der Antriebsvorrichtung 100 herauszuführen und gleichzeitig ein Eindringen von Feuchtigkeit in den Innenraum 106 zu verhindern. Bei der Membran kann es sich beispielsweise um eine mikroporöse Membran handeln, welche Polytetrafluorethylen umfasst. Die mikroporöse Membran kann beispielsweise mehr als eine Milliarde kleiner Öffnungen pro cm² Membranfläche umfassen. Eine von einer Öffnung eingenommene Fläche kann im Wesentlichen 1/20000 eines Durchmessers eines Wassertropfens und im Wesentlichen dem 700-fachen eines Durchmessers eines Wasserdampfmoleküls entsprechen. Im Wesentlichen ist dabei so zu verstehen, dass eine Abweichung der Fläche der Öffnung von 1/20000 des Durchmessers des Wassertropfens oder eine Abweichung der Fläche der Öffnung von dem 700-fachen des Durchmessers des Wasserdampfmoleküls kleiner gleich 20%, kleiner gleich 10%, kleiner gleich 5% ist oder einem Wert von 1/20000 des Durchmessers des Wassertropfens und dem 700-fachen des Durchmessers des Wasserdampfmoleküls entspricht. Auf diese Weise kann eine Membran bereitgestellt werden, welche wasserdicht und gleichzeitig durchlässig für Wasserdampf ist. Um die Feuchtigkeit aus dem Innenraum 106 auf effiziente Weise über die Druckausgleichskomponente 107 aus dem Innenraum 106 herauszuführen, kann in dem Innenraum 106 der Antriebsvorrichtung 100 weiterhin eine Heizvorrichtung angeordnet sein, mittels welcher eine in dem Innenraum 106 eingedrungen Flüssigkeit in die gasförmige Phase überführt und somit über die Druckausgleichskomponente 107 aus dem Innenraum 106 der Antriebsvorrichtung 100 herausgeführt werden kann.

Fig. 2a und b zeigen eine weitere Ausführungsform einer Antriebsvorrichtung 200 zum Antreiben einer Komponente 204 einer Behälterbehandlungsanlage 210, wobei Fig. 2a eine Draufsicht auf eine Rundläufermaschine 209 der Behälterbehandlungsanlage 210 und Fig. 2b einen Schnitt durch einen Teilbereich der Rundläufermaschine 209 der Fig. 2a zeigt. Die Ausführungsform der Fig. 2a und b kann mit der Ausführungsform der Fig. 1 kombiniert werden.

Die in der Fig. 2a gezeigte Rundläufermaschine 209 einer Behälterbehandlungsanlage 210 weist eine Vielzahl von Behälteraufnahmen 204 zur Aufnahme von Behältern 205 auf, welche entlang des Umfangs der Rundläufermaschine 209 angeordnet sind. Die in der Fig. 2a dargestellte Anzahl von um den Umfang der Rundläufermaschine 209 angeordneten Behälteraufnahmen 204 und die Position, an welcher diese angeordnet sind, ist als beispielhaft zu verstehen. So kann die Rundläufermaschine 209 auch jede andere Anzahl von Behälteraufnahmen 204 umfassen, welche an anderen Positionen der Rundläufermaschine 209 angeordnet sind.

In der Ausführungsform der Fig. 2a sind die Behälteraufnahmen 204 als Drehteller 204 ausgestaltet, welche mittels der Antriebsvorrichtung 200 in Rotation 207 versetzt werden können. Die in der Fig. 2a gezeigte Antriebsvorrichtung 200 kann hierfür einen Servomotor umfassen.

Ein Drehteller kann wenigstens eine Kontaktöffnung zum Verbinden des Drehtellers mit dem Servomotor umfassen. Es kann beispielsweise vorgesehen sein, dass eine Antriebswelle des Servomotors wenigstens ein Verbindungselement umfasst, welches mit der wenigstens einen Kontaktöffnung des Drehtellers in Verbindung gebracht werden kann. Beispielsweise kann der Drehteller mit der Antriebswelle über die wenigstens eine Kontaktöffnung und das wenigstens eine Verbindungselement über eine Schraubverbindung verbunden sein.

Dass die Drehteller 204 mittels der Antriebsvorrichtung 200 in Rotation 207 versetzt werden können, ist als beispielhaft zu verstehen. Alternativ oder zusätzlich können die Drehteller 204 mittels der Antriebsvorrichtung 200 beispielsweise auch translatorisch in einer Richtung senkrecht zu einer Drehebene 211 der Rundläufermaschine 209 bewegt werden.

Die entlang des Umfangs der Rundläufermaschine 209 angeordneten Antriebsvorrichtungen 200 können über Kabelverbindungen in Reihe geschalten sein, so dass nur eine der Antriebsvorrichtungen 200 direkt mit einer Steuereinheit zum Steuern der Antriebsvorrichtungen in Verbindung stehen kann, und die übrigen Antriebsvorrichtungen indirekt über die anderen Antriebsvorrichtungen mit der Steuereinheit in Verbindung stehen können.

Wie in der Fig. 2a gezeigt, kann die Antriebsvorrichtung 200 in vertikaler Richtung unterhalb des Drehtellers 204 entlang einer radialen Richtung der Rundläufermaschine 209 angeordnet sein.

Weiterhin kann die Antriebsvorrichtung 200 bezüglich einer vertikalen Richtung entweder oberhalb oder unterhalb eines Behältertisches der Rundläufermaschine 209 angeordnet sein. Der Behältertisch kann eine Vielzahl von Bohrungen aufweisen, welche symmetrisch entlang eines Umfangs des Behältertisches angeordnet sein können und in welche die Antriebsvorrichtungen 200 entweder von oben oder unten an den Behältertisch angeschraubt werden können. Auf diese Weise können die Antriebsvorrichtungen 200 effizient gegen Schmutz und Korrosion geschützt werden.

Ferner kann es vorgesehen sein, dass eine Abmessung der Antriebsvorrichtung 200 entlang einer Richtung zunimmt und dass jeweils ein Drehteller und eine Antriebsvorrichtung 200 in einem Bereich 206 der Rundläufermaschine 209 angeordnet sind.

Bei der in der Fig. 2a gezeigten Anordnung der Antriebsvorrichtung 200 unterhalb des Drehtellers 204 entlang einer radialen Richtung der Rundläufermaschine 209, nimmt eine Breite der Antriebsvorrichtung 200 entlang der radialen Richtung von einem Mittelpunkt der Rundläufermaschine 209 nach außen hin zu. Um dies zu erreichen kann die Antriebsvorrichtung 200, wie in der Fig. 2a gezeigt, entlang der radialen Richtung eine dreieckige Form aufweisen. Die in der Fig. 2a dargestellte idealisiert dreieckige Form der Antriebsvorrichtung 200 ist als beispielhaft zu verstehen. Die Antriebsvorrichtung 200 kann beispielsweise auch geringfügige Abweichungen von der dreieckigen Form aufweisen oder jede andere Form aufweisen, deren Abmessung in horizontaler Richtung vom Mittelpunkt der Rundläufermaschine 209 in radialer Richtung nach außen hin zunimmt. Bei entsprechender Ausgestaltung der Antriebsvorrichtung 200 kann eine Anzahl von Antriebsvorrichtungen 200 und Drehtellern 204, welche auf der Rundläufermaschine 209 angeordnet werden können, maximiert werden.

Wie bereits im Zusammenhang mit der Fig. 1 erläutert, umfasst die Antriebsvorrichtung 200, wie in dem in der Fig. 2b dargestellten Schnitt durch einen Teilbereich des in der Fig. 2a gezeigten Rundläufers 209 ersichtlich, ein Dichtungselement 202, welches einen Innenraum 208 der Antriebsvorrichtung 200 von einer Umgebung abdichtet. Das Dichtungselement 202 kann dabei vorgesehen sein, um eine Öffnung der Antriebsvorrichtung 200 durch welche ein Antriebselement 201 der Antriebsvorrichtung 200 mittels welchem ein Antrieb der Komponente 204 der Behälterbehandlungsanlage 209, wobei die Komponente 204 in der Ausführungsform der Fig. 2a und b der Drehteller 204 der Rundläufermaschine 209 ist, erreicht werden kann. Die in der Fig. 2b gezeigte Anordnung der Antriebsvorrichtung 200 an der Rundläufermaschine sowie die Anordnung des Antriebselements und des Dichtungselements 202 in der Antriebsvorrichtung 200 ist als beispielhaft zu verstehen. Die eben beschriebenen Komponenten können auch auf jede andere geeignete Weise an der Rundläufermaschine und/oder an der Antriebsvorrichtung 200 angeordnet sein. Beispielsweise kann es vorgesehen sein, dass die Antriebsvorrichtung 200 in vertikaler Richtung von unten an der Rundläufermaschine 209 mittels wenigstens einer Schraubverbindung befestigt sein kann. Die Rundläufermaschine 209 kann in einem Teilbereich, an welchem die Antriebsvorrichtung an die Rundläufermaschine angebracht werden kann, eine Aussparung umfassen, durch welche das Antriebselement 201 der Antriebsvorrichtung 200 durch die Rundläufermaschine 209 hindurchgeführt werden kann und die Komponente 204 der Behälterbehandlungsanlage 209 antreiben kann.

Wie in dem in der Fig. 2b gezeigten Schnitt durch einen Teilbereich des in der Fig. 2a gezeigten Rundläufers 209 dargestellt, muss sich die Antriebsvorrichtung 200 nicht entlang der gesamten von einem Mittelpunkt der Rundläufermaschine ausgehenden radialen Richtung der Rundläufermaschine erstrecken, sondern kann auch nur einen Teillängenbereich, wie beispielsweise 70%, 50%, 30%, 15% oder jeden anderen Teillängenbereich entlang der radialen Richtung der Rundläufermaschine einnehmen.

Weiterhin umfasst die Aufnahmevorrichtung 200 ein Überwachungssystem 203, das ausgebildet ist, einen Verschleißzustand des Dichtungselements 202 zu überwachen. Das Überwachungssystem 203 kann entsprechend des Überwachungssystems 103 der Ausführungsform der Figur 1 ausgestaltet sein.

## Patentansprüche

1. Antriebsvorrichtung zum Antreiben einer Komponente einer Behälterbehandlungsanlage, wobei die Antriebsvorrichtung wenigstens ein Dichtungselement zum Abdichten eines Innenraums der Antriebsvorrichtung und ein Überwachungssystem umfasst, wobei das Überwachungssystem ausgebildet ist, einen Verschleißzustand des Dichtungselements zu überwachen.

2. Antriebsvorrichtung nach Anspruch 1, wobei das Überwachungssystem einen Feuchtigkeitssensor umfasst und ausgebildet ist, basierend auf einem durch den Feuchtigkeitssensor bestimmten Feuchtigkeitswert im Innenraum den Verschleißzustand des Dichtungselements zu bestimmen.

3. Antriebsvorrichtung nach Anspruch 1 oder 2, wobei das Überwachungssystem einen Sensor zum Bestimmen eines Betriebsparameters der Antriebsvorrichtung umfasst und ausgebildet ist, einen Betriebsparameter der Antriebsvorrichtung, welcher mit einem durch die Antriebsvorrichtung zum Erreichen einer bestimmten Drehzahl aufzuwendenden Drehmoment in Verbindung steht, zu bestimmen.

4. Antriebsvorrichtung nach Anspruch 2 oder 3, wobei das Überwachungssystem ausgebildet ist den Feuchtigkeitswert und/oder den Betriebsparametermit einem Referenzfeuchtigkeitswert und/oder einem Referenzbetriebsparameterwert zu vergleichen und basierend auf dem Vergleich den Verschleißzustand des Dichtungselements zu bestimmen.

5. Antriebsvorrichtung nach Anspruch 4, wobei das Überwachungssystem ausgebildet ist, den Verschleißzustand mit einem Referenzwert zu vergleichen und basierend auf dem Vergleich, eine Information an einen Bediener auszugeben, dass das Dichtungselement ausgetauscht werden muss oder basierend auf dem Vergleich eine Information an einen Bediener auszugeben, welche einen Wartungszeitpunkt umfasst, zu welchem das Dichtungselement ausgetauscht werden muss.

6. Antriebsvorrichtung nach einem der Ansprüche 1 bis 5, wobei die Antriebsvorrichtung eine Druckausgleichskomponente umfasst, über welche eine in der Antriebsvorrichtung vorhandene Feuchtigkeit aus der Antriebsvorrichtung herausgeführt werden kann.

7. Antriebsvorrichtung nach einem der Ansprüche 1 bis 6, wobei die Antriebsvorrichtung einen Servomotor und die Komponente einen an einer Rundläufermaschine der Behälterbehandlungsanlage angeordneten Drehteller umfasst, wobei die Antriebsvorrichtung ausgebildet ist unterhalb des Drehtellers und entlang einer radialen Richtung der Rundläufermaschine angeordnet zu werden.

8. Antriebsvorrichtung nach Anspruch 7, wobei eine Abmessung der Antriebsvorrichtung entlang einer Richtung zunimmt, wobei bei Anordnung der Antriebsvorrichtung unterhalb des Drehtellers entlang der radialen Richtung der Rundläufermaschine, die Abmessung der Antriebsvorrichtung entlang der radialen Richtung zunimmt.

9. Verfahren zum Antreiben einer Komponente einer Behälterbehandlungsanlage mittels einer Antriebsvorrichtung, wobei die Antriebsvorrichtung wenigstens ein Dichtungselement zum Abdichten eines Innenraums der Antriebsvorrichtung und ein Überwachungssystem umfasst, wobei das Überwachungssystem einen Verschleißzustand des Dichtungselements überwacht.

10. Verfahren nach Anspruch 9, wobei das Überwachungssystem einen Feuchtigkeitssensor umfasst und basierend auf einem durch den Feuchtigkeitssensor bestimmten Feuchtigkeitswert im Innenraum den Verschleißzustand des Dichtungselements bestimmt.

11. Verfahren nach einem der Ansprüche 9 oder 10, wobei das Überwachungssystem einen Sensor zum Bestimmen eines Betriebsparameters der Antriebsvorrichtung umfasst und einen Betriebsparameter der Antriebsvorrichtung, welcher mit einem durch die Antriebsvorrichtung zum Erreichen einer bestimmten Drehzahl aufzuwendenden Drehmoment in Verbindung steht, bestimmt.

12. Verfahren nach einem der Ansprüche 10 oder 11, wobei das Überwachungssystem den Feuchtigkeitswert und/oder den Betriebsparametermit einem Referenzfeuchtigkeitswert und/oder einem Referenzbetriebsparameterwert vergleicht und basierend auf dem Vergleich den Verschleißzustand des Dichtungselements bestimmt.

13. Verfahren nach Anspruch 12, wobei das Überwachungssystem den Verschleißzustand mit einem Referenzwert vergleicht und basierend auf dem Vergleich, eine Information an einen Bediener ausgibt, dass das Dichtungselement ausgetauscht werden muss oder basierend auf dem Vergleich eine Information an einen Bediener ausgibt, welche einen Wartungszeitpunkt umfasst, zu welchem das Dichtungselement ausgetauscht werden muss.

14. Verfahren nach einem der Ansprüche 9 bis 13, wobei die Antriebsvorrichtung eine Druckausgleichskomponente umfasst, über welche eine in der Antriebsvorrichtung vorhandene Feuchtigkeit aus der Antriebsvorrichtung herausgeführt wird.

15. Verfahren nach einem der Ansprüche 9 bis 14, wobei die Antriebsvorrichtung einen Servomotor und die Komponente einen an einer Rundläufermaschine der Behälterbehandlungsanlage angeordneten Drehteller umfasst, wobei die Antriebsvorrichtung unterhalb des Drehtellers und entlang einer radialen Richtung der Rundläufermaschine angeordnet ist, wobei optional eine Abmessung der Antriebsvorrichtung entlang einer Richtung zunimmt, wobei bei Anordnung der Antriebsvorrichtung unterhalb des Drehtellers entlang der radialen Richtung, die Abmessung der Antriebsvorrichtung entlang der radialen Richtung zunimmt.
